# FASCICULE DE BREVET EUROPEEN

(11) **EP 2 803 524 B1**
(45) Date de publication et mention de la délivrance du brevet: **12.09.2018**
(21) Numéro de dépôt: 14168036.3
(22) Date de dépôt: 13.05.2014
(51) Int. Cl.: B60L 11/18

(54) **Dispositif de charge par induction de batteries d'un véhicule automobile électrique**
Induktionsaufladegerät für Batterie eines elektrischen Kraftfahrzeugs
Device for inductive charging of the batteries of an electric motor vehicle

(30) Priorité: 14.05.2013 FR 1354320
(43) Date de publication de la demande: 19.11.2014
(73) Titulaire: Schneider Electric Industries SAS, 92500 Rueil-Malmaison (FR)
(72) Inventeur: Blondel, Charles, 38050 GRENOBLE Cedex 09 (FR); Gualino, David, 38050 GRENOBLE Cedex 09 (FR); Duverger, Philippe, 38050 GRENOBLE Cedex 09 (FR); Labattut, Christian, 38050 GRENOBLE Cedex 09 (FR); Duponchel, Stéphane, 38050 GRENOBLE Cedex 09 (FR)
(74) Mandataire: Lavoix

(56) Documents cités:
- WO-A1-2012/132145
- DE-A1-102007 033 654
- US-A1- 2011 133 692
- US-A1- 2011 181 240

## Description

La présente invention concerne un dispositif de charge par induction de batteries d'un véhicule automobile électrique.

Dans le domaine de la charge de batteries d'un véhicule automobile électrique, il est connu d'utiliser un coupleur inductif comprenant un bobinage primaire raccordé à une source d'énergie électrique et positionné à proximité du sol et un bobinage secondaire raccordé aux batteries du véhicule. En effet, la technologie de recharge des véhicules électriques par induction propose l'avantage important de ne pas nécessiter de câbles à connecter lors de la charge des batteries du véhicule.

Un enjeu persistant pour les dispositifs de charge par induction de batteries d'un véhicule automobile électrique reste l'optimisation du rendement et la réduction du rayonnement électromagnétique. La position du bobinage primaire par rapport au bobinage secondaire, et plus particulièrement de la boucle d'induction primaire correspondant au bobinage primaire par rapport à la boucle d'induction secondaire correspondant au bobinage secondaire est un facteur important pour le rendement. En outre, la taille des boucles d'induction primaires et secondaires est un facteur essentiel pour la réduction du rayonnement électromagnétique. Ainsi, afin d'optimiser le rendement et de réduire le rayonnement électromagnétique il est nécessaire que les deux boucles d'induction primaire et secondaire soient centrées l'une par rapport à l'autre et de taille globalement similaire.

Pour améliorer le positionnement du bobinage primaire par rapport au bobinage secondaire, et des boucles d'induction primaire et secondaire correspondantes, il est connu des dispositifs mécaniques décrits dans US 2011/181240 A1 et FR-A-2 740 921. Il est notamment connu de FR-A-2 740 921, d'utiliser un guide en entonnoir, associé au bobinage secondaire ou primaire, agencé pour guider le bobinage secondaire ou primaire afin d'assurer son positionnement transversal et longitudinal et donc le centrage correct des bobinages secondaire et primaire l'un par rapport à l'autre. Ce type de dispositif est mécaniquement complexe et il est nécessaire, dans ce type de dispositif, que les systèmes mécaniques associés aux bobinages primaire et secondaire soient mécaniquement appariés. Plus précisément, il y a contact entre les systèmes mécaniques associés aux bobinages primaire et secondaire et donc un risque de détérioration dans le temps du dispositif.

Il est aussi connu de WO-A-2010 06078 de mesurer le transfert d'énergie entre le bobinage primaire et le bobinage secondaire et de déplacer le bobinage primaire en fonction du transfert d'énergie mesuré. Cette méthode reste complexe puisqu'il est nécessaire de positionner le bobinage primaire par étape jusqu'à obtenir une bonne efficacité du transfert d'énergie.

C'est à ces inconvénients qu'entend plus particulièrement remédier l'invention en proposant un dispositif de charge par induction de batterie d'un véhicule automobile électrique pour lequel le positionnement du bobinage primaire par rapport au bobinage secondaire est optimisé et réalisé de façon simple, rapide, précise et peu coûteuse.

A cet effet, l'invention a pour objet un dispositif de charge par induction de batteries d'un véhicule automobile électrique, le dispositif comprenant un bobinage primaire raccordé à une source d'énergie électrique et compris dans un boîtier, le bobinage primaire étant apte à réaliser un couplage inductif avec un bobinage secondaire raccordé aux batteries du véhicule et le boîtier étant positionné à proximité du sol. Conformément à l'invention, le dispositif comprend au moins un support de réception d'au moins une roue du véhicule, chaque support étant positionné sur le sol et comprenant au moins un premier élément apte, lorsque le support auquel il appartient est en contact avec la roue, à se déplacer en direction du sol, tandis que le dispositif comprend pour chaque support des moyens de liaison entre chaque premier élément et le boîtier qui sont aptes en fonction du déplacement de chaque premier élément à agir sur la position du boîtier par rapport au bobinage secondaire, suivant un axe transversal de rotation des roues.

Grâce à l'invention, la position des roues est récupérée à l'aide d'un déplacement des premiers éléments et le poids du véhicule est utilisé et transformé en un mouvement permettant de fixer la position du bobinage primaire par rapport au bobinage secondaire. Le dispositif permet de centrer le bobinage primaire par rapport au bobinage secondaire pour un rendement optimal de la charge de la batterie et un rayonnement électromagnétique minimal. Par ailleurs, le dispositif fait intervenir des éléments technologiquement simples et donc peu coûteux et permet un positionnement précis du bobinage primaire par rapport au bobinage secondaire. En outre, le dispositif s'adapte à la position de la voiture sur le ou les supports.

Selon des aspects avantageux mais non obligatoires de l'invention, un tel dispositif peut incorporer une ou plusieurs des caractéristiques suivantes, prises dans toutes les combinaisons techniquement admissibles :
- Chaque support comprend plusieurs premiers éléments, tandis que pour chaque support, les premiers éléments sont en saillie, vers l'extérieur du support, d'une première partie destinée à recevoir les roues.
- Les moyens de liaison comprennent, pour chaque support, un premier câble, un système démultiplicateur de mouvement et un deuxième câble, le premier câble étant relié au système démultiplicateur et le système démultiplicateur étant relié au boîtier par le deuxième câble.
- Le deuxième câble comprend une portion élastique.
- Chaque système démultiplicateur est un système de leviers propre à démultiplier le déplacement du premier câble par un facteur compris entre 4 et 20.
- Pour chaque support les premiers éléments sont propres lors de leur déplacement à appliquer un premier effort sur chaque premier câble, le premier câble traversant au moins partiellement chaque support, alors que chaque support comprend des deuxièmes éléments aptes à maintenir surélevé par rapport au sol chaque premier câble.
- Pour chaque support, le premier câble est relié d'un côté au système démultiplicateur et de l'autre à une partie fixe du dispositif, tandis que le premier effort appliqué par les premiers éléments lors de leur déplacement est propre à engendrer un déplacement du premier câble, par rapport au système démultiplicateur, en direction du support auquel lesdits premiers éléments appartiennent, ce déplacement étant propre à être reproduit sur le deuxième câble et par conséquent sur le boîtier, en étant démultiplié par le système démultiplicateur.
- Dans chaque support, les premiers éléments comprennent chacun une base mobile suivant un axe vertical, parallèle au poids du véhicule, destinée à être en contact avec la ou les roues, la base mobile étant reliée solidairement à un premier galet, apte à appliquer le premier effort, suivant l'axe vertical, sur le premier câble, alors que les deuxièmes éléments incluent chacun une base fixe et un deuxième galet apte à maintenir le premier câble surélevé par rapport au sol.
- Chaque support comprend un bâti qui inclut sur une face en regard de chaque base mobile des butées propres à limiter le déplacement de chaque base mobile en direction du sol, et en ce que chaque base mobile est associée à au moins un ressort qui la relie au bâti et qui est propre à fixer la position des premiers éléments lorsqu'ils ne sont pas en contact avec la ou les roues.
- Chaque base mobile comprend une première face destinée à être en contact avec la ou les roues en forme de rectangle et globalement parallèle au sol.
- Chaque base mobile comprend une deuxième face destinée à être en contact avec la ou les roues en forme de cylindre à base triangulaire.
- Chaque base mobile comprend une troisième face, destinée à être contact avec la ou les roues, en forme de rectangle incliné par rapport au sol, un côté de la troisième face le plus haut suivant l'axe vertical étant celui le plus éloigné du boîtier, tandis que dans chaque support, chaque premier élément comprend un bras qui part de sa base mobile jusqu'à la base mobile du premier élément le plus proche en allant vers le boîtier, et lorsque la ou les roues sont en contact avec un premier élément et le déplace, le bras est propre à déplacer tous les autres premiers éléments plus proches du boîtier que ce premier élément de la même manière.
- Le dispositif comprend deux supports disposés de part et d'autre du boîtier et propres à recevoir chacun une roue du véhicule, tandis que chaque support est propre à fixer la position du véhicule suivant un axe longitudinal du véhicule.
- Les deux supports sont positionnés coaxialement suivant l'axe transversal de rotation des roues et les moyens de liaison sont aptes à agir sur la position, suivant ledit axe transversal, du boîtier par rapport au bobinage secondaire.

L'invention sera mieux comprise et d'autres avantages de celle-ci apparaîtront plus clairement à la lumière de la description qui va suivre d'un dispositif de charge par induction de batteries d'un véhicule automobile électrique, donnée uniquement à titre d'exemple et faite en référence aux dessins annexés dans lesquels :
- la figure 1 est une vue schématique, de dessus, d'un dispositif conforme à l'invention ;
- la figure 2 est une vue en coupe, suivant le quatrième axe X4, du dispositif de la figure 1 selon un premier mode de réalisation de premiers éléments ;
- la figure 3 est une vue similaire à la figure 2 pour laquelle un véhicule est en cours d'utilisation du dispositif ;
- la figure 4 est une vue similaire à la figure 3 sur laquelle le véhicule à une position différente et est en cours d'utilisation du dispositif ;
- la figure 5 est une vue à plus grande échelle du détail V de la figure 3 ;
- la figure 6 est une vue en coupe, suivant le troisième axe X3, de la figure 5 ;
- la figure 7 illustre un deuxième mode de réalisation des premiers éléments ;
- la figure 8 illustre un troisième mode de réalisation des premiers éléments.

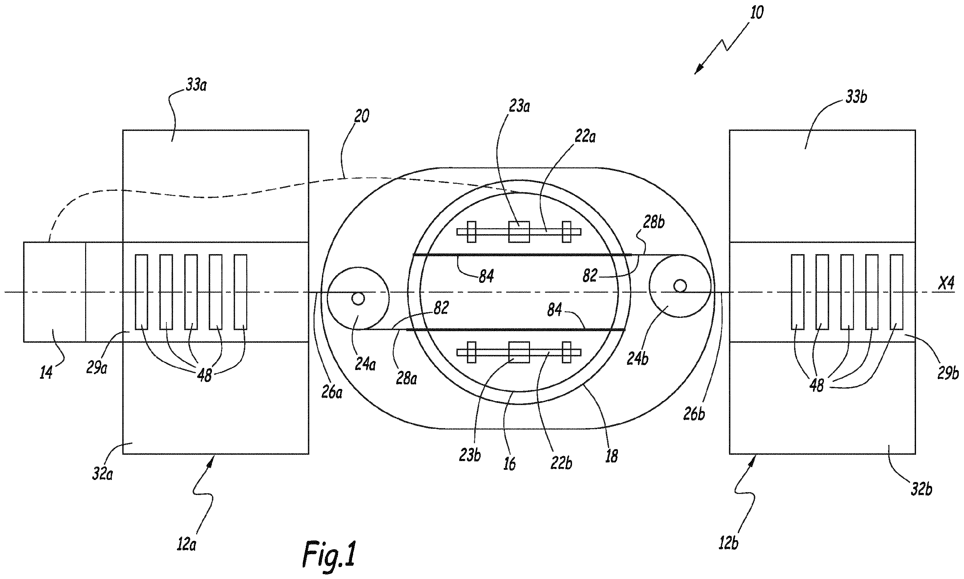

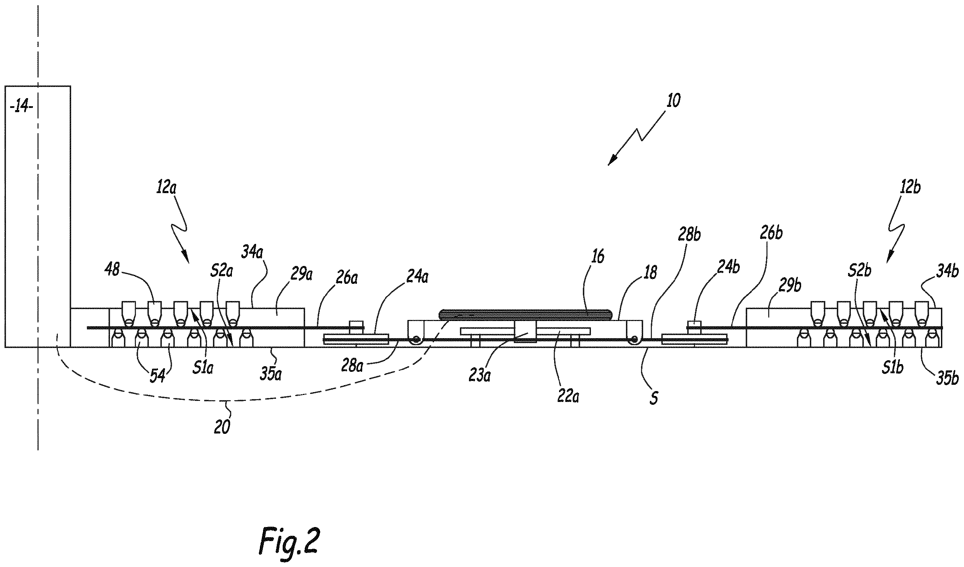

La figure 1 présente un dispositif 10 en configuration de repos, c'est-à-dire qu'aucun véhicule n'est positionné sur le dispositif 10 afin de recharger ses batteries. Le dispositif 10 comprend deux supports 12a, 12b positionnés au sol S, une borne 14 de configuration de la charge d'un véhicule électrique, non représenté aux figures 1 et 2, et un bobinage primaire 16. Le bobinage primaire 16 est positionné sur un boîtier 18 et relié au secteur, c'est-à-dire dans ce cas à la borne 14, par un câble électrique 20. Le boîtier 18 est positionné sur des glissières 22a, 22b auxquelles il est rattaché par des moyens de fixation 23a, 23b. Les glissières 22a, 22b sont propres à guider le déplacement du boîtier 18. En outre, le boîtier 18 est positionné à proximité du sol S puisque les glissières 22a et 22b sont fixées au sol S.

Dans la suite de la description on s'attache plus particulièrement à décrire le support 12a. Cependant la description du support 12a s'applique également au support 12b qui est similaire.

Par ailleurs, le dispositif 10 comprend, comme illustré à la figure 1, des systèmes démultiplicateurs tels que deux poulies 24a, 24b associées chacune à un support 12a, 12b. Les poulies 24a, 24b sont reliées d'une part, par l'intermédiaire d'un premier câble 26a, 26b, à un support différent 12a, 12b et d'autre part, au boîtier 18 par l'intermédiaire d'un deuxième câble noté respectivement 28a, 28b.

Les poulies 24a, 24b sont aptes à démultiplier le mouvement du premier câble 26a, 26b sur le deuxième câble 28a, 28b par un facteur, de préférence égal à 16 et plus généralement compris entre 4 et 20.

On remarque que mise à part la borne 14, le dispositif 10 est globalement symétrique par rapport au boîtier 18.

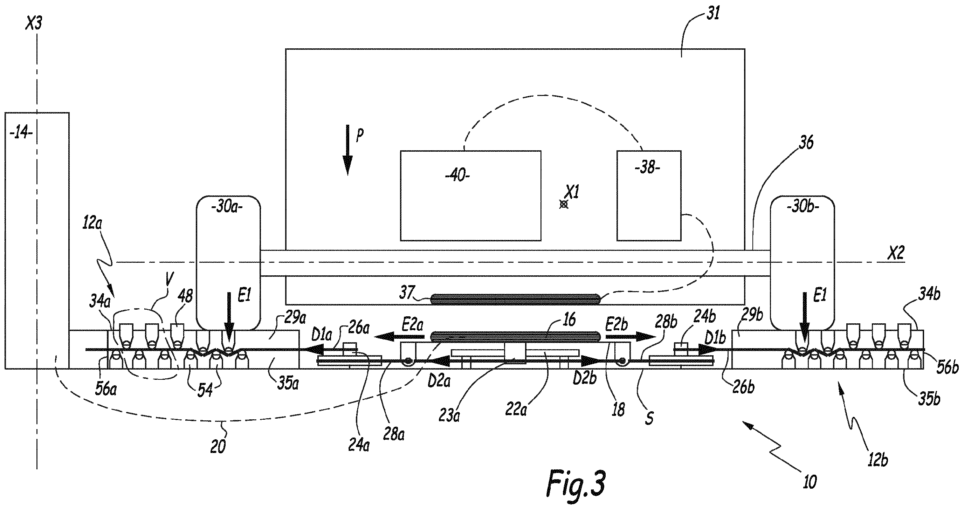

Chaque support 12a, 12b comprend une partie centrale 29a, 29b destinée à recevoir des roues 30a et 30b d'un véhicule 31, comme représenté à la figure 3. Chaque support 12a, 12b comprend également deux rampes notées respectivement 32a, 32b et 33a, 33b. Les rampes 32a, 32b, 33a, 33b sont destinées à permettre la montée du véhicule 31 sur la partie centrale 29a, 29b et la descente du véhicule 31 de la partie centrale 29a, 29b. Avantageusement les rampes 32a, 32b et 33a, 33b sont inclinées par rapport au sol S de façon à favoriser la montée et la descente du véhicule 31.

La partie centrale 29a, 29b de chaque support 12a, 12b comprend une première partie 34a, 34b destinée à être en contact avec les roues 30a, 30b et une deuxième partie 35a, 35b en contact avec le sol S sur lequel repose le dispositif 10.

Les supports 12a et 12b sont des supports de réception des roues 30a, 30b et permettent de fixer la position du véhicule 31 suivant un axe longitudinal X1 du véhicule 31, appelé également premier axe X1.

Par ailleurs, les deux supports 12a, 12b sont positionnés coaxialement par rapport à un axe transversal X2 de rotation des roues, également appelé deuxième axe X2, et les deux roues 30a, 30b sont disposées coaxialement suivant le deuxième axe X2 et sont positionnées de part et d'autre du véhicule 31.

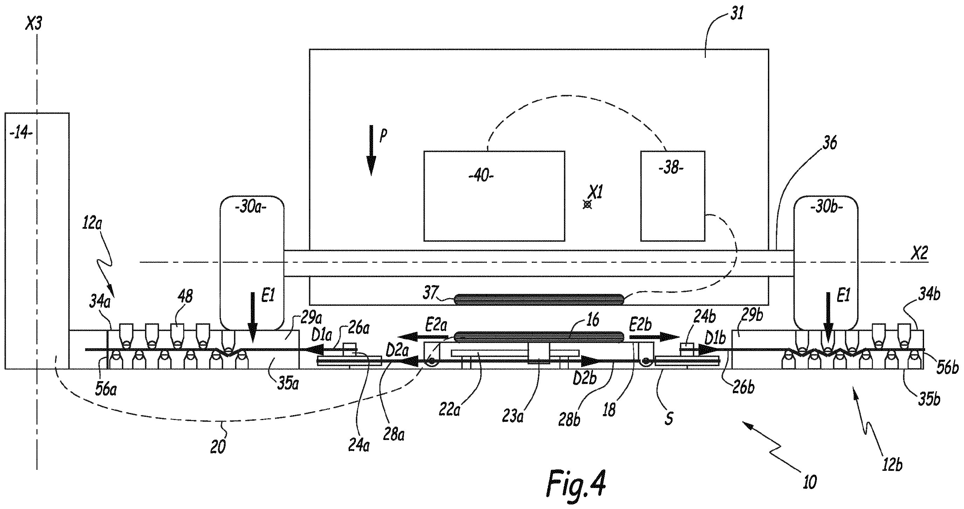

Aux figures 3 et 4, le dispositif 10 est représenté en configuration d'utilisation. C'est-à-dire que le véhicule 31, schématiquement représenté par les deux roues 30a, 30b, une liaison mécanique 36 entre ses deux roues 30a, 30b, un bobinage secondaire 37, un dispositif de conversion électrique 38 et des batteries 40, est en position de recharge de ses batteries 40. Le bobinage secondaire 37 est relié électriquement au dispositif de conversion électrique 38 lui-même relié aux batteries 40.

Le bobinage secondaire 37 est propre à réaliser un couplage inductif avec le bobinage primaire 16. Le bobinage primaire 16 joue alors le rôle d'émetteur et le bobinage secondaire 37 le rôle de récepteur.

Le dispositif de conversion 38 permet de convertir le courant induit délivré par le bobinage secondaire 37 en un courant acceptable pour recharger les batteries 40 qui alimentent en électricité le véhicule 31.

En outre, chaque support 12a, 12b comprend sur sa partie centrale 29a, 29b des premiers éléments 48 comme visible sur les figures 2 à 5. Les premiers éléments 48 sont en saillie, vers l'extérieur des supports 12a, 12b, de la première partie 34a, 34b. Ainsi, lorsque le véhicule 31 est positionné sur les supports 12a, 12b, suivant la position des roues 30a, 30b du véhicule 31 sur les parties centrales 29a, 29b, les roues 30a, 30b sont parfois, comme visible à la figure 3, en contact avec certains premiers éléments 48. Aux figures 3 et 4, on observe que les premiers éléments 48 en contact avec les roues 30a, 30b ont été déplacés par rapport à leur position de repos visible aux figures 1 et 2. Ainsi, les premiers éléments 48 sont aptes à se déplacer suivant un axe vertical X3, également appelé troisième axe X3, parallèle au poids P du véhicule 31.

Les premiers éléments 48 sont positionnés sur la première partie 34a, 34b successivement parallèlement au deuxième axe X2 et sont en contact avec le premier câble 26a, 26b qui traverse respectivement les supports 12a, 12b parallèlement au deuxième axe X2.

De plus on remarque aux figures 2 à 4 que chaque support 12a, 12b comprend sur sa partie centrale 29a, 29b des deuxièmes éléments 54 positionnés sur la deuxième partie 35a, 35b, en direction de la première partie 34a, 34b. Les deuxièmes éléments 54 sont disposés successivement parallèlement au deuxième axe X2 et sont en contact avec le premier câble 26a, 26b.

Les premiers éléments 48 et les deuxièmes éléments 54 sont positionnés les uns par rapport aux autres de sorte qu'en regard des deuxièmes éléments 54, une première surface interne S1a, S1b de la première partie 34a, 34b est libre tandis qu'en regard des premiers éléments 48 une deuxième surface interne S2a, S2b de la deuxième partie 35a, 35b est libre.

De plus, dans le mode de réalisation illustré aux figures 1 à 4, les premières S1a, S1b et deuxièmes S2a, S2b surfaces internes ne comprennent pas sur toute leur longueur suivant le deuxième axe X2 des premiers éléments 48 et des deuxièmes éléments 54. En effet, les premières S1a, S1b et deuxièmes S2a, S2b surfaces internes comprennent chacune respectivement une portion sans premiers éléments 48 et deuxièmes éléments 54 du côté du boîtier 18. Le fait d'avoir une portion sans premiers éléments 48 et une portion sans deuxièmes éléments 54 permet d'assurer le bon fonctionnement du dispositif 10. En effet, la portion sans premiers éléments 48 permet d'assurer qu'en fonction de la position des roues 30a, 30b sur les supports 12a, 12b, le nombre de premiers éléments 48 déplacés, par rapport à leur position de repos, ne soit pas forcément le même, comme représenté à la figure 4. Les portions respectivement sans premiers éléments 48 et sans deuxièmes éléments 54 permettent également, dans le cas où les deux roues 30a et 30b sont complètement comprises sur la portion sans premiers éléments 48, de ne pas solliciter les câbles 26a, 26b, 28a, 28b, les premiers éléments 48 et les deuxièmes éléments 54 et ainsi de limiter l'usure du dispositif 10.

Comme illustré à la figure 3, le premier câble 26a, 26b de chaque support fait le lien entre les premiers éléments 48 propres à chaque support et les poulies 24a, 24b. Le premier câble 26a, 26b est relié d'un côté à la poulie 24a, 24b et de l'autre à une partie fixe 56a, 56b de chaque support 12a, 12b positionnée après les premiers éléments 48 et les deuxièmes éléments 54 par rapport au boîtier 18.

Les premiers éléments 48 sont propres à appliquer un premier effort E1 sur chaque premier câble 26a, 26b en direction du sol, parallèlement au troisième axe X3, lorsqu'ils sont mis en mouvement à cause de la présence d'une roue 30a, 30b du véhicule 31 sur une partie centrale 29a, 29b du support 12a, 12b auquel ils appartiennent.

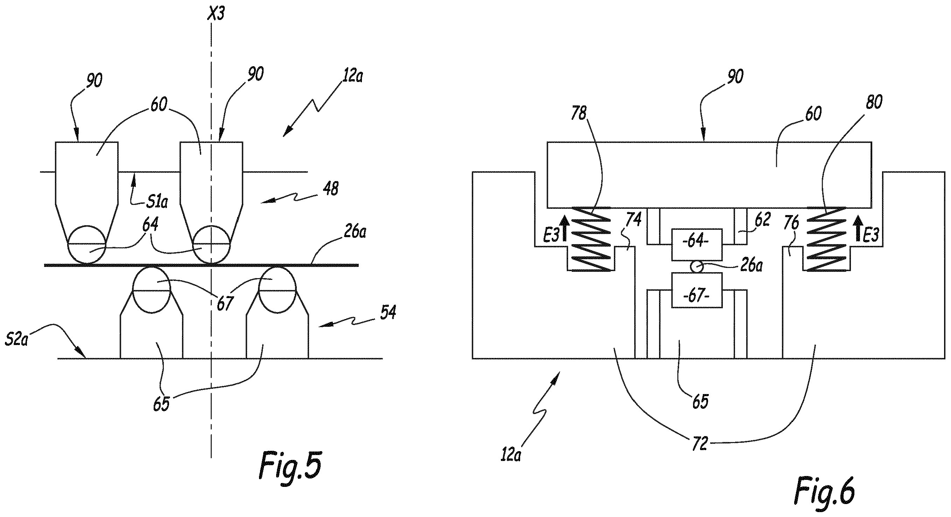

Selon un premier mode de réalisation illustré aux figures 5 et 6, les premiers éléments 48 comprennent une base mobile 60 destinée à être en contact avec les roues 30a, 30b et reliée par un premier arbre 62 à un premier galet 64 en contact avec le premier câble 26a, 26b. Chaque premier galet 64 est solidaire du mouvement de la base mobile 60 qui lui est associée et est propre à exercer le premier effort E1 correspondant au poids P du véhicule sur le premier câble 26a, 26b, lorsque la base 60 à laquelle il est associé est mise en mouvement par la ou les roues 30a, 30b du véhicule 31.

En outre, les deuxièmes éléments 54 comprennent une base fixe 65 reliée à un deuxième galet 67. Le deuxième galet 67 est en contact avec le premier câble 26a, 26b. Les deuxièmes éléments 54 sont propres à surélever le premier câble 26a, 26b par rapport au sol S et à la deuxième partie 35a, 35b. Comme illustré aux figures 3 et 4, lorsque les premiers éléments 48 sont déplacés en direction du sol S, le premier effort E1 appliqué sur le premier câble 26a, 26b, traversant le support 12a, 12b auquel appartiennent les premiers éléments 48, engendre un premier déplacement D1a, D1b du premier câble 26a, 26b, par rapport à la poulie 24a, 24b, en direction du support 12a, 12b. Ce premier déplacement D1a, D1b du premier câble 26a, 26b implique, grâce à la poulie 24a, 24b, un deuxième déplacement D2a, D2b démultiplié du deuxième câble 28a, 28b en direction du support 12a, 12b. Or le deuxième câble 28a, 28b est relié au boîtier 18. Le deuxième câble 28a, 28b exerce donc un deuxième effort E2a, E2b, fonction du premier effort E1, sur le boîtier 18, parallèlement au deuxième axe X2, en direction du support 12a, 12b comprenant les premiers éléments 48 déplacés. Les poulies 24a, 24b, premiers câbles 26a, 26b et deuxièmes câbles sont ainsi aptes à agir sur la position du boîtier 18 par rapport au bobinage secondaire 37, suivant le deuxième axe X2.

Le premier effort E1 est appliqué suivant une direction parallèle au poids P du véhicule 31, tandis que le deuxième effort E2a, E2b est appliqué suivant une direction parallèle au deuxième axe X2.

A la figure 3 les roues 30a, 30b sont positionnées respectivement au même endroit sur chaque support 12a, 12b. Les deuxièmes efforts E2a et E2b sont donc égaux et le boîtier 18 reste positionné au milieu du dispositif 10. Dans la variante de la figure 4, le positionnement des roues 30a, 30b est différent et les deuxièmes efforts E2a et E2b ne sont pas égaux. Dans ce cas le boîtier 18 est décalé par rapport au centre du dispositif suivant le deuxième axe X2 et aligné avec le bobinage secondaire 37. Comme illustré à la figure 4, la position du boitier 18 sur la glissière 22a a été modifiée par rapport à la figure 3 afin que les bobinages primaire et secondaire soient alignés.

La figure 6 montre le support 12a et correspond à un premier mode de réalisation des premiers éléments 48, de même que la figure 5. A la figure 6, le support 12a comprend un bâti 72 qui traverse le support 12a parallèlement au deuxième axe X2. Le bâti 72, est creusé en son centre de sorte que le premier câble 26a puisse traverser le support 12a et que les premiers éléments 48 et deuxièmes éléments 54 compris dans le support 12a puissent être installés.

Par ailleurs, le bâti 72 inclut en regard de chaque base mobile 60 deux butées 74, 76 propres à limiter le déplacement de chaque base mobile 60 en direction du sol. Chaque base mobile 60 est associée à deux ressorts 78, 80 qui la relient, suivant le troisième axe X3, au bâti 72. Les ressorts 78, 80 sont propres à exercer un troisième effort E3 suivant le troisième axe X3 du véhicule 31, afin de fixer la position des premiers éléments 48 lorsqu'ils sont en position de repos, c'est-à-dire pas en contact avec la roue 30a. Les ressorts 78, 80 permettent de faciliter le retour en position de repos des premiers éléments 48 lorsque le véhicule 31 descend du support 12a. Les ressorts 78, 80 permettent également de soulager en effort le premier câble 26a se trouvant en contact avec les premiers galets 64.

Le deuxième câble 28a, 28b comprend préférentiellement une portion rigide 82 et une portion élastique 84, comme illustré à la figure 1. La portion rigide 82 fait le lien entre la poulie 24a, 24b et la portion élastique 84, tandis que la portion élastique 84 fait le lien entre la portion rigide 82 et le boîtier 18. La portion élastique 84 permet de prendre en compte le fait qu'il puisse y avoir plusieurs tailles de roues 30a, 30b et plusieurs longueurs, suivant le deuxième axe X2, de liaison mécanique 36 entre les roues 30a et 30b.

Dans le premier mode de réalisation, comme visible aux figures 5 et 6, la base mobile 60 comprend une face 90 destinée à être en contact avec la roue 30a, de forme rectangulaire. Cette face 90 est globalement parallèle au sol S. Ainsi quelle que soit la position de la roue 30a sur un premier élément 48 avec lequel elle est en contact, le premier effort E1 appliqué sur ce premier élément est globalement le même.

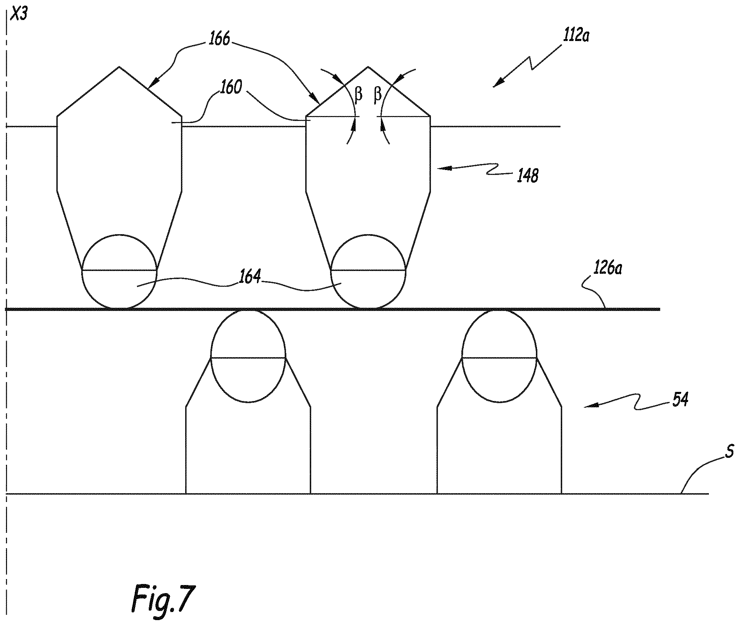

Dans un deuxième mode de réalisation un support 112a comprend des premiers éléments 148 visibles à la figure 7, les premiers éléments 148 sont globalement similaires à ceux du premier mode de réalisation et comprennent une base mobile 160 et un premier galet 164 en contact avec un premier câble 126a. La différence avec le premier mode de réalisation est que la base mobile 160 comprend une face 166 destinée à être en contact avec la roue 30a en forme de cylindre à base triangulaire. Les deux faces du cylindre à base triangulaire, les plus éloignées du premier galet 164, suivant l'axe X3, sont inclinées par rapport au sol S d'un angle β généralement supérieur à 30°. La valeur de l'angle β dépend du dimensionnement du dispositif 10. Ainsi, suivant la position de la roue 30a sur un premier élément 148 avec lequel elle est en contact, le premier effort E1 appliqué sur ce premier élément 148 est différent. Cette forme de la face 166 permet un réglage plus fin de l'alignement du boîtier 18 et du bobinage secondaire 37.

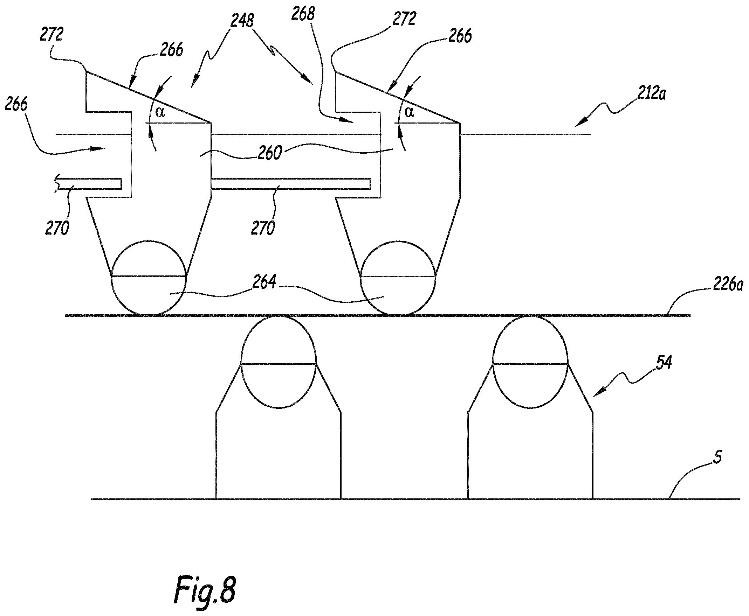

Dans un troisième mode de réalisation représenté à la figure 8, un support 212a comprend des premiers éléments 248 comprenant une base mobile 260 et un galet 264 similairement aux premier et deuxième modes de réalisation. Le galet 264 est en contact avec un premier câble 226a. La base mobile 260 comprend une troisième face 266 destinée à être en contact avec la ou les roues en forme de rectangle incliné d'un angle α par rapport au sol S généralement supérieur à 30°. La valeur de l'angle α dépend du dimensionnement global du dispositif 10. L'inclinaison est telle que le côté 272 de la face troisième 266 le plus haut, par rapport au sol S, suivant le troisième axe X3, est celui le plus éloigné du boîtier 18.

De plus, chaque premier élément 248 comprend en regard du premier élément 248 le plus proche en allant vers la borne 14, non représentée à la figure 8, une encoche 268. Par ailleurs, chaque premier élément 248 comprend un bras 270 qui part de sa base mobile 260 jusqu'à l'intérieur de l'encoche 268 de la base mobile 260 du premier élément 248 le plus proche en allant vers le boîtier 18. Lorsque la roue 30a est en contact avec un premier élément 248 de contact et le déplace, chaque bras 270 est propre à déplacer les premiers éléments 248 plus proches du boîtier 18 que ce premier élément de contact de la même manière. Ce troisième mode de réalisation, permet de ne pas influencer la position du boîtier 18 par rapport au bobinage secondaire 37 essentiellement lorsque la largeur des roues 30a, 30b, suivant le deuxième axe X2, est faible. En effet, lorsque la largeur des roues est faible, il y a un risque que des premiers éléments 48 positionnés suivant l'axe X2, entre les roues 30a ou 30b et le boîtier 18, et qui ne sont pas au contact avec la roue 30a ou 30b, exercent un effort E1 sur le premier câble 26a ou 26b moins important que nécessaire pour le bon positionnement du dispositif 10. Ainsi, le troisième mode de réalisation permet de garantir le bon fonctionnement du dispositif 10 dans le cas de roues de faible largeur. En outre, avec le troisième mode de réalisation, en comparaison du premier mode de réalisation, on a un fonctionnement plus linéaire du dispositif 10. Plus particulièrement, le mouvement des premiers éléments 248 dépend de la surface de contact entre la face 266 et la roue 30a.

Le dispositif 10 fonctionne quelle que soit la taille des roues 30a, 30b et permet de positionner le bobinage primaire 16 et le boîtier 18 par rapport au bobinage secondaire 37 en fonction de la position des roues 30a et 30b suivant le deuxième axe X2. En effet un nombre plus au moins grand de premiers éléments 48, 148, 248 est déplacé suivant la position des roues 30a, 30b. La position des roues 30a, 30b suivant le deuxième axe X2 est récupérée avec un mouvement des premiers éléments 48, 148, 248 en direction du sol et le poids P du véhicule est utilisé et transformé en un déplacement D2a, D2b parallèle au deuxième axe X2.

De plus le dispositif 10 a une hauteur limitée. Plus précisément les poulies 24a, 24b permettent de limiter la hauteur mesurée parallèlement au troisième axe X3 des supports 12a et 12b, afin d'intégrer le dispositif 10 dans un garage. Ainsi l'encombrement du dispositif 10 est minimal.

Par ailleurs la portion élastique du deuxième câble 28a, 28b permet de limiter les contraintes en termes d'effort dans le dispositif 10. La portion élastique 84 offre un dispositif 10 fiable et robuste.

Ainsi, l'invention permet d'avoir un positionnement du bobinage primaire 16 par rapport au bobinage secondaire 37 précis et fiable, afin d'avoir un chargement des batteries 40 efficace avec un rendement optimisé. Le positionnement du bobinage primaire 16 par rapport au bobinage secondaire 37 est réalisé de manière rapide, simple, peu coûteuse et automatique.

Selon une autre variante, le deuxième câble 28a, 28b ne comprend pas deux portions et est seulement un câble rigide.

Avantageusement la largeur suivant le deuxième axe X2 des supports 12a, 12b est égale à deux ou trois fois la taille des roues 30a, 30b.

Selon une autre variante et avantageusement, le système démultiplicateur utilisé n'est pas une poulie mais un système de leviers.

Selon une autre variante, le dispositif comprend un seul support ou encore plus de deux supports 12a, 12b. Dans cette variante le déplacement du boîtier 18 ne sera plus uniquement suivant le deuxième axe X2.

Selon une autre variante chaque support ne comprend qu'un seul premier élément 48 et qu'un seul deuxième élément 54.

Selon une autre variante, le bobinage primaire est positionné dans le boîtier.

Selon une autre variante, le premier galet 64, 164, 264 n'est pas en contact direct avec le câble 26a, 26b, 126a, 226a, mais est propre lorsque la base mobile à laquelle il est associé est mise en mouvement à venir exercer le premier effort E1 sur le premier câble 26a, 26b, 126a, 226a.

Selon une autre variante, le deuxième galet 67 n'est pas en contact avec le câble 26a, 26b, 126a, 226a mais est propre à maintenir le câble 26a, 26b, 126a, 226a surélevé par rapport au sol S et à la deuxième partie 35a.

Selon une autre variante, le premier câble 26a, 126a, 226a, 26b traverse le support 12a, 12b seulement partiellement.

Selon une autre variante, les premières S1a, S1b et deuxièmes S2a, S2b surfaces internes comprennent respectivement des premiers éléments 48 et des deuxièmes éléments 54 sur toute leur longueur, suivant le deuxième axe X2.

## Revendications

1. Dispositif (10) de charge par induction de batteries (40) d'un véhicule automobile électrique (31), le dispositif comprenant un bobinage primaire (16) raccordé à une source d'énergie électrique (14) et compris dans un boîtier (18), le bobinage primaire (16) étant apte à réaliser un couplage inductif avec un bobinage secondaire (37) raccordé aux batteries (40) du véhicule et le boîtier étant positionné à proximité du sol (S), comprenant au moins un support (12a, 12b, 112a, 212a) de réception d'au moins une roue (30a, 30b) du véhicule, chaque support étant positionné sur le sol et comprenant au moins un premier élément (48 ; 148 ; 248) apte, lorsque le support (12a, 12b ; 112a ; 212a) auquel il appartient est en contact avec la roue (30a, 30b), à se déplacer en direction du sol, le dispositif comprenant pour chaque support des moyens de liaison (24a, 26a, 28a, 24b, 26b, 28b ; 126a ; 226a) entre chaque premier élément (48 ; 148 ; 248) et le boîtier mobile (18), **caractérisé en ce que** les moyens de liaison(24a, 26a, 28a, 24b, 26b, 28b ; 126a ; 226a) sont aptes, en fonction du déplacement de chaque premier élément, à agir sur la position, suivant un axe transversal (X2) de rotation des roues (30a, 30b), du boîtier (18) par rapport au bobinage secondaire (37).

2. Dispositif selon la revendication 1, **caractérisé en ce que** chaque support (12a, 12b) comprend plusieurs premiers éléments (48; 148 ; 248), et **en ce que** pour chaque support (12a, 12b ; 112a ; 212a), les premiers éléments (48; 148 ; 248) sont en saillie, vers l'extérieur du support (12a, 12b ; 112a ; 212a), d'une première partie (34a, 34b) destinée à recevoir une ou des roues (30a, 30b).

3. Dispositif selon l'une des revendications précédentes, **caractérisé en ce que** les moyens de liaison (24a, 26a, 28a, 24b, 26b, 28b ; 126a ; 226a) comprennent, pour chaque support (12a, 12b ; 112a ; 212a), un premier câble (26a, 26b ; 126a ; 226a), un système démultiplicateur (24a, 24b) de mouvement et un deuxième câble (28a, 28b), le premier câble (26a, 26b ; 126a ; 226a) étant relié au système démultiplicateur (24a, 24b) et le système démultiplicateur étant relié au boîtier (18) par le deuxième câble (28a, 28b).

4. Dispositif selon la revendication 3, **caractérisé en ce que** le deuxième câble (28a, 28b) comprend une portion élastique (84).

5. Dispositif selon l'une des revendications 3 ou 4, **caractérisé en ce que** chaque système démultiplicateur (24a, 24b) est un système de leviers propre à démultiplier le déplacement (D1a, D1b) du premier câble (26a, 26b ; 126a ; 226a) par un facteur compris entre 4 et 20.

6. Dispositif selon l'une des revendications 3 à 5, **caractérisé en ce que** pour chaque support (12a, 12b ; 112a ; 212a) les premiers éléments (48 ; 148 ; 248) sont propres lors de leur déplacement à appliquer un premier effort (E1) sur chaque premier câble (26a, 26b ; 126a ; 226a), le premier câble traversant au moins partiellement chaque support (12a, 12b; 112a ; 212a) et **en ce que** chaque support comprend des deuxièmes éléments (54) aptes à maintenir surélevé par rapport au sol chaque premier câble (26a, 26b ; 126a ; 226a).

7. Dispositif selon la revendication 6, **caractérisé en ce que** pour chaque support (12a, 12b; 112a ; 212a), le premier câble (26a, 26b; 126a ; 226a) est relié d'un côté au système démultiplicateur (24a, 24b) et de l'autre à une partie fixe (56a, 56b) du dispositif, et **en ce que** le premier effort (E1) appliqué par les premiers éléments (48 ; 148 ; 248) lors de leur déplacement est propre à engendrer un déplacement (D1a, D1b) du premier câble (26a, 26b ; 126a ; 226a), par rapport au système démultiplicateur (24a, 24b), en direction du support auquel lesdits premiers éléments appartiennent (48 ; 148 ; 248), ce déplacement (D1a, D1b) étant propre à être reproduit sur le deuxième câble (28a, 28b) et par conséquent sur le boîtier (18), en étant démultiplié par le système démultiplicateur (24a, 24b).

8. Dispositif selon l'une des revendications 6 à 7, **caractérisé en ce que** dans chaque support (12a, 12b; 112a ; 212a), les premiers éléments (48 ; 148 ; 248) comprennent chacun une base mobile (60 ; 160 ; 260) suivant un axe vertical (X3), parallèle au poids (P) du véhicule (31), destinée à être en contact avec la ou les roues (30a, 30b), la base mobile (60 ; 160 ; 260) étant reliée solidairement à un premier galet (64 ; 164 ; 264), apte à appliquer le premier effort (E1), suivant l'axe vertical (X3), sur le premier câble (26a, 26b ; 126a ; 226a), et **en ce que** les deuxièmes éléments (54) incluent chacun une base fixe (65) et un deuxième galet (67) apte à maintenir le premier câble surélevé par rapport au sol (S).

9. Dispositif selon la revendication 8, **caractérisé en ce que** chaque support (12a) comprend un bâti (72) qui inclut sur une face en regard de chaque base mobile (60; 160 ; 260) des butées (74, 76) propres à limiter le déplacement de chaque base mobile (60; 160 ; 260) en direction du sol (S), et **en ce que** chaque base mobile (60; 160 ; 260) est associée à au moins un ressort (78, 80) qui la relie au bâti (72) et qui est propre à fixer la position des premiers éléments (48 ; 148 ; 248) lorsqu'ils ne sont pas en contact avec la ou les roues (30a, 30b).

10. Dispositif selon l'une des revendications 8 à 9, **caractérisé en ce que** chaque base mobile (60) comprend une première face (90) destinée à être en contact avec la ou les roues (30a, 30b) en forme de rectangle et globalement parallèle au sol (S).

11. Dispositif selon l'une des revendications 8 à 9, **caractérisé en ce que** chaque base mobile (160) comprend une deuxième face (166) destinée à être en contact avec la ou les roues (30a, 30b) en forme de cylindre à base triangulaire.

12. Dispositif selon l'une des revendications 8 à 9, **caractérisé en ce que** chaque base mobile (260) comprend une troisième face (266), destinée à être contact avec la ou les roues (30a, 30b), en forme de rectangle incliné par rapport au sol (S), un côté (272) de la troisième face (266) le plus haut suivant l'axe vertical (X3) étant celui le plus éloigné du boîtier (18), **en ce que** chaque premier élément (248) comprend un bras (270) qui part de sa base mobile (260) jusqu'à la base mobile (260) du premier élément (248) le plus proche en allant vers le boîtier (18), et **en ce que** lorsque la ou les roues sont en contact avec un premier élément (248) de contact et le déplacent, le bras (270) du premier élément de contact est propre à déplacer tous les autres premiers éléments plus proches du boîtier (18) que le premier élément de contact de la même manière.

13. Dispositif selon l'une des revendications précédentes, **caractérisé en ce que** le dispositif comprend deux supports (12a, 12b ; 112a ; 212a) disposés de part et d'autre du boîtier (18) et propres à recevoir chacun une roue (30a, 30b) du véhicule (31), et **en ce que** chaque support (12a, 12b ; 112a ; 212a) est propre à fixer la position du véhicule suivant un axe (X1) longitudinal du véhicule (31).

14. Dispositif selon la revendication 13, **caractérisé en ce que** les deux supports (12a, 12b ; 112a ; 212a) sont positionnés coaxialement suivant l'axe transversal (X2) de rotation des roues et **en ce que** les moyens de liaison (24a, 26a, 28a, 24b, 26b, 28b ; 126a ; 226a) sont aptes à agir sur la position, suivant ledit axe transversal (X2), du boîtier (18) par rapport au bobinage secondaire (37).

## Patentansprüche

1. Induktionsladevorrichtung (10) für Batterien (40) eines Elektroautomobils (31), wobei die Vorrichtung eine Primärwicklung (16) aufweist, die an eine elektrische Energiequelle (14) angeschlossen und in einem Gehäuse (18) eingeschlossen ist, wobei die Primärwicklung (16) in der Lage ist, eine induktive Kopplung mit einer Sekundärwicklung (37) herzustellen, die an die Batterien (40) des Fahrzeugs angeschlossen ist, und wobei das Gehäuse im Nahbereich des Bodens (S) positioniert ist, mindestens eine Aufnahmehalterung (12a, 12b, 112a, 212a) für mindestens ein Rad (30a, 30b) des Fahrzeugs umfassend, wobei jede Halterung auf dem Boden positioniert ist und mindestens ein erstes Element (48; 148; 248) aufweist, das in der Lage ist, wenn die Halterung (12a, 12b, 112a, 212a), zu der es gehört, in Kontakt mit dem Rad (30a, 30b) ist, sich in Richtung auf den Boden zu verlagern, wobei die Vorrichtung für jede Halterung Verbindungseinrichtungen (24a, 26a, 28a, 24b, 26b, 28b; 126a; 226a) zwischen jedem ersten Element (48; 148; 248) und dem beweglichen Gehäuse (18) aufweist, **dadurch gekennzeichnet, dass** die Verbindungseinrichtungen (24a, 26a, 28a, 24b, 26b, 28b; 1266a; 226a) in der Lage sind, in Abhängigkeit von der Verlagerung jedes ersten Elements, auf die Position entlang einer Drehungsquerachse (X2) der Räder (30a, 30b) des Gehäuses (18) in Bezug auf die Sekundärwicklung (37) einzuwirken.

2. Vorrichtung nach Anspruch 1, **dadurch gekennzeichnet, dass** jede Halterung (12a, 12b) mehrere erste Elemente (48; 148; 248) aufweist, und dass für jede Halterung (12a, 12b, 112a, 212a) die ersten Elemente (48; 148; 248) von einem ersten Teil (34a, 34b), das dazu bestimmt ist, ein Rad oder Räder (30a, 30b) aufzunehmen, zum Außenbereich der Halterung (12a, 12b, 112a, 212a) hin vorstehen.

3. Vorrichtung nach einem der vorhergehenden Ansprüche, **dadurch gekennzeichnet, dass** die Verbindungseinrichtungen (24a, 26a, 28a, 24b, 26b, 28b; 126a; 226a) für jede Halterung (12a, 12b, 112a, 212a) ein erstes Seil (26a, 26b; 126a; 226a), ein Bewegungsuntersetzungssystem (24a, 24b) und ein zweites Seil (28a, 28b) aufweisen, wobei das erste Seil (26a, 26b; 126a; 226a) mit dem Untersetzungssystem (24a, 24b) verbunden ist, und das Untersetzungssystem durch das zweite Seil (28a, 28b) mit dem Gehäuse (18) verbunden ist.

4. Vorrichtung nach Anspruch 3, **dadurch gekennzeichnet, dass** das zweite Seil (28a, 28b) einen elastischen Teilbereich (84) aufweist.

5. Vorrichtung nach einem der Ansprüche 3 oder 4, **dadurch gekennzeichnet, dass** jedes Untersetzungssystem (24a, 24b) ein Hebelsystem ist, das sich dazu eignet, die Verlagerung (D1a, D1b) des ersten Seils (26a, 26b; 126a; 226a) um einen Faktor zu untersetzen, der zwischen 4 und 20 beträgt.

6. Vorrichtung nach einem der Ansprüche 3 bis 5, **dadurch gekennzeichnet, dass** sich für jede Halterung (12a, 12b, 112a, 212a) die ersten Elemente (48; 148; 248) dazu eignen, bei ihrer Verlagerung eine erste Kraft (E1) an jedes erste Seil (26a, 26b; 126a; 226a) anzulegen, wobei das erste Seil zumindest teilweise jede Halterung (12a, 12b, 112a, 212a) durchquert, und dass jede Halterung zweite Elemente (54) aufweist, die in der Lage sind, jedes erste Seil (26a, 26b; 126a; 226a) in Bezug auf den Boden angehoben zu halten.

7. Vorrichtung nach Anspruch 6, **dadurch gekennzeichnet, dass** für jede Halterung (12a, 12b, 112a, 212a) das erste Seil (26a, 26b; 126a; 226a) auf einer Seite mit dem Untersetzungssystem (24a, 24b) und auf der anderen mit einem feststehenden Teil (56a, 56b) der Vorrichtung verbunden ist, und dass die erste Kraft (E1), die durch die ersten Elemente (48; 148; 248) bei deren Verlagerung angelegt wird, sich dazu eignet, eine Verlagerung (D1a, D1b) des ersten Seils (26a, 26b; 126a; 226a) in Bezug auf das Untersetzungssystem (24a, 24b) in Richtung auf die Halterung hervorzurufen, zu denen die ersten Elemente(48; 148; 248) gehören, wobei sich diese Verlagerung (D1a, D1b) dazu eignet, am zweiten Seil (28a, 28b) und folglich am Gehäuse (18) reproduziert und dabei durch das Untersetzungssystem (24a, 24b) untersetzt zu werden.

8. Vorrichtung nach einem der Ansprüche 6 bis 7, **dadurch gekennzeichnet, dass** in jeder Halterung (12a, 12b, 112a, 212a) die ersten Elemente (48; 148; 248) jeweils eine entlang einer vertikalen Achse (X3) parallel zum Gewicht (P) des Fahrzeugs (31) beweglichen Sockel (60; 160; 260) aufweisen, der dazu bestimmt ist, mit dem Rad oder den Rädern (30a, 30b) in Kontakt zu stehen, wobei der bewegliche Sockel (60; 160; 260) fest mit einer ersten Rolle (64; 164; 264) verbunden ist, die in der Lage ist, die erste Kraft (E1) entlang der vertikalen Achse (X3) an das erste Seil (26a, 26b; 126a; 226a) anzulegen, und dass die zweiten Elemente (54) jeweils einen feststehenden Sockel (65) und eine zweite Rolle (67) haben, die in der Lage ist, das erste Seil in Bezug auf den Boden (S) angehoben zu halten.

9. Vorrichtung nach Anspruch 8, **dadurch gekennzeichnet, dass** jede Halterung (12a) einen Unterbau (72) aufweist, der auf einer Fläche, die jedem mobilen Sockel (60; 160; 260) zugewandt ist, Anschläge (74, 76) hat, die dazu geeignet sind, die Verlagerung jedes mobilen Sockels (60; 160; 260) in Richtung auf den Boden (S) einzuschränken, und dass jeder mobile Sockel (60; 160; 260) mindestens einer Feder (78, 80) zugeordnet ist, die ihn mit dem Unterbau (72) verbindet, und die dazu geeignet ist, die Position der ersten Elemente (48; 148; 248) zu fixieren, wenn diese nicht mit dem Rad oder den Rädern (30a, 30b) in Kontakt sind.

10. Vorrichtung nach einem der Ansprüche 8 bis 9, **dadurch gekennzeichnet, dass** jeder bewegliche Sockel (60) eine erste Fläche (90) in Form eines Rechtecks und insgesamt parallel zum Boden (S) aufweist, die dazu bestimmt ist, mit dem Rad oder den Rädern (30a, 30b) in Kontakt zu stehen.

11. Vorrichtung nach einem der Ansprüche 8 bis 9, **dadurch gekennzeichnet, dass** jeder bewegliche Sockel (160) eine zweite Fläche (166) in Form eines Zylinders mit dreieckiger Basis aufweist, die dazu bestimmt ist, mit dem Rad oder den Rädern (30a, 30b) in Kontakt zu stehen.

12. Vorrichtung nach einem der Ansprüche 8 bis 9, **dadurch gekennzeichnet, dass** jeder bewegliche Sockel (26) eine dritte Fläche (266) in Form eines in Bezug auf den Boden (S) geneigten Rechtecks aufweist, die dazu bestimmt ist, mit dem Rad oder den Rädern (30a, 30b) in Kontakt zu stehen, wobei eine entlang der vertikalen Achse (X3) höchste Seite (272) der dritten Fläche (266) diejenige ist, die vom Gehäuse (18) am weitesten entfernt ist, dass jedes erste Element (248) einen Arm (270) aufweist, der von seinem beweglichen Sockel (260) bis zum beweglichen Sockel (260) des naheliegendsten ersten Elements (248) ausgeht und dabei zum Gehäuse (18) hin verläuft, und dass das Rad oder die Räder in Kontakt mit einem ersten Kontaktelement (248) steht bzw. stehen und es verlagern, wobei der Arm (270) des ersten Kontaktelements dazu geeignet ist, alle anderen näher am Gehäuse (18) liegenden ersten Elemente auf dieselbe Weise zu verlagern wie das erste Kontaktelement.

13. Vorrichtung nach einem der vorhergehenden Ansprüche, **dadurch gekennzeichnet, dass** die Vorrichtung zwei Halterungen (12a, 12b, 112a, 212a) aufweist, die beidseits des Gehäuses (18) angeordnet und dazu geeignet sind, jeweils ein Rad (30a, 30b) des Fahrzeugs (31) aufzunehmen, und dass jede Halterung (12a, 12b, 112a, 212a) dazu geeignet ist, die Position des Fahrzeugs entlang einer Längsachse (X1) des Fahrzeugs (31) zu fixieren.

14. Vorrichtung nach Anspruch 13, **dadurch gekennzeichnet, dass** die zwei Halterungen (12a, 12b, 112a, 212a) koaxial entlang der Drehungsquerachse (X2) der Räder positioniert sind, und dass die Verbindungseinrichtungen (24a, 26a, 28a, 24b, 26b, 28b; 126a; 226a) in der Lage sind, entlang der Querachse (X2) auf die Position des Gehäuses (18) in Bezug auf die Sekundärwicklung (37) einzuwirken.

## Claims

1. Induction charging device (10) for batteries (40) of an electric motor vehicle (31), the device comprising a primary winding (16) connected to an electrical energy source (14) and included in a housing (18), the primary winding (16) being capable of producing an inductive coupling with a secondary winding (37) connected to the batteries (40) of the vehicle and the housing being positioned in proximity to the ground (S), comprising at least one support (12a, 12b, 112a, 212a) for receiving at least one wheel (30a, 30b) of the vehicle, each support being positioned on the ground and comprising at least one first element (48; 148; 248) capable, when the support (12a, 12b; 112a; 212a) to which it belongs is in contact with the wheel (30a, 30b), of being displaced towards the ground, the device comprising, for each support, link means (24a, 26a, 28a, 24b, 26b, 28b; 126a; 226a) between each first element (48; 148; 248) and the mobile housing (18), **characterized in that** the link means (24a, 26a, 28a, 24b, 26b, 28b; 126a; 226a) are capable, as a function of the displacement of each first element, of acting on the position, on a transverse axis (X2) of rotation of the wheels (30a, 30b), of the housing (18) relative to the secondary winding (37).

2. Device according to Claim 1, **characterized in that** each support (12a, 12b) comprises several first elements (48; 148; 248), and **in that**, for each support (12a, 12b; 112a; 212a), the first elements (48; 148; 248) protrude, outward from the support (12a, 12b; 112a; 212a), from a first part (34a, 34b) intended to receive one or more wheels (30a, 30b) .

3. Device according to one of the preceding claims, **characterized in that** the link means (24a, 26a, 28a, 24b, 26b, 28b; 126a; 226a) comprise, for each support (12a, 12b; 112a; 212a), a first cable (26a, 26b; 126a; 226a), a movement reduction gear system (24a, 24b) and a second cable (28a, 28b), the first cable (26a, 26b; 126a, 226a) being linked to the reduction gear system (24a, 24b) and the reduction gear system being linked to the housing (18) by the second cable (28a, 28b).

4. Device according to Claim 3, **characterized in that** the second cable (28a, 28b) comprises an elastic portion (84).

5. Device according to one of Claims 3 or 4, **characterized in that** each reduction gear system (24a, 24b) is a system of levers specifically for gearing down the displacement (D1a, D1b) of the first cable (26a, 26b; 126; 226a) by a factor of between 4 and 20.

6. Device according to one of Claims 3 to 5, **characterized in that**, for each support (12a, 12b; 112a; 212a), the first elements (48; 148; 248) are designed, upon their displacement, to apply a first load (E1) on each first cable (26a, 26b; 126a; 226a), the first cable passing at least partially through each support (12a, 12b; 112a; 212a) and **in that** each support comprises second elements (54) capable of keeping each first cable (26a, 26b; 126a; 226a) raised relative to the ground.

7. Device according to Claim 6, **characterized in that**, for each support (12a, 12b; 112a; 212a), the first cable (26a, 26b; 126a; 226a) is linked on one side to the reduction gear system (24a, 24b) and on the other side to a fixed part (56a, 56b) of the device, and **in that** the first load (E1) applied by the first elements (48; 148; 248) in their displacement is designed to generate a displacement (D1a, D1b) of the first cable (26a, 26b; 126a; 226a), relative to the reduction gear system (24a, 24b), towards the support to which said first elements belong (48; 148; 248), this displacement (D1a, D1b) being designed to be reproduced on the second cable (28a, 28b) and consequently on the housing (18), by being geared down by the reduction gear system (24a, 24b).

8. Device according to one of Claims 6 or 7, **characterized in that**, in each support (12a, 12b; 112a; 212a), the first elements (48; 148; 248) each comprise a mobile base (60; 160; 260) on a vertical axis (X3), parallel to the weight (P) of the vehicle (31), intended to be in contact with the wheel or wheels (30a, 30b), the mobile base (60; 160; 260) being securely linked to a first roller (64; 164; 264), capable of applying the first load (E1), along the vertical axis (X3), on the first cable (26a, 26b; 126a; 226a), and **in that** the second elements (54) each include a fixed base (65) and a second roller (67) capable of keeping the first cable raised relative to the ground (S).

9. Device according to Claim 8, **characterized in that** each support (12a) comprises a frame (72) which includes on a face facing each mobile base (60; 160; 260), abutments (74, 76) designed to limit the displacement of each mobile base (60; 160; 260) towards the ground (S), and **in that** each mobile base (60; 160; 260) is associated with at least one spring (78, 80) which links it to the frame (72) and which is designed to fix the position of the first elements (48; 148; 248) when they are not in contact with the wheel or wheels (30a, 30b).

10. Device according to one of Claims 8 or 9, **characterized in that** each mobile base (60) comprises a first face (90) intended to be in contact with the wheel or wheels (30a, 30b) in the form of a rectangle and overall parallel to the ground (S).

11. Device according to one of Claims 8 or 9, **characterized in that** each mobile base (160) comprises a second face (166) intended to be in contact with the wheel or wheels (30a, 30b) in the form of a cylinder with a triangular base.

12. Device according to one of Claims 8 or 9, **characterized in that** each mobile base (260) comprises a third face (266), intended to be in contact with the wheel or wheels (30a, 30b), in the form of a rectangle inclined relative to the ground (S), one side (272) of the third face (266) that is the highest along the vertical axis (X3) being that furthest away from the housing (18), and **in that** each first element (248) comprises an arm (270) which goes from its mobile base (260) to the mobile base (260) of the first element (248) that is the closest going towards the housing (18), and **in that**, when the wheel or wheels are in contact with a first contact element (248) and displace it, the arm (270) of the first contact element is designed to displace all the other first elements closer to the housing (18) than the first contact element in the same way.

13. Device according to one of the preceding claims, **characterized in that** the device comprises two supports (12a, 12b; 112a; 212a) arranged on either side of the housing (18) and designed to each receive a wheel (30a, 30b) of the vehicle (31), and **in that** each support (12a, 12b; 112a; 212a) is designed to fix the position of the vehicle on a longitudinal axis (X1) of the vehicle (31).

14. Device according to Claim 13, **characterized in that** the two supports (12a, 12b; 112a; 212a) are positioned coaxially on the transverse axis (X2) of rotation of the wheels and **in that** the link means (24a, 26a, 28a, 24b, 26b, 28b; 126a; 226a) are capable of acting on the position, on said transverse axis (X2), of the housing (18) relative to the secondary winding (37).
